# EUROPEAN PATENT APPLICATION

(11) **EP 4 729 396 A1**
(43) Date of publication of application: **22.04.2026**
(21) Application number: 24892672.7
(22) Date of filing: 24.04.2024
(51) Int. Cl.: B62D 21/15

(54) **VEHICLE BODY ASSEMBLY AND VEHICLE**

(30) Priority: 21.11.2023 CN 202311562430
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: TANG, Jinming, Hangzhou, Zhejiang 310051 (CN); CHEN, Kaihao, Hangzhou, Zhejiang 310051 (CN); CHENG, Qianqian, Hangzhou, Zhejiang 310051 (CN); ZHANG, Lanmin, Hangzhou, Zhejiang 310051 (CN); WANG, Tongling, Hangzhou, Zhejiang 310051 (CN); LUAN, Taiyu, Hangzhou, Zhejiang 310051 (CN); LIAO, Wenjian, Hangzhou, Zhejiang 310051 (CN); LIANG, Hu, Hangzhou, Zhejiang 310051 (CN); HU, Zhiyong, Hangzhou, Zhejiang 310051 (CN); ZHANG, Hailong, Hangzhou, Zhejiang 310051 (CN); YONG, Kuan, Hangzhou, Zhejiang 310051 (CN); LI, Lei, Hangzhou, Zhejiang 310051 (CN)
(74) Representative: Boult Wade Tennant LLP
(86) International application number: PCT/CN2024/089673
(87) International publication number: WO 2025/107506

(57) **Abstract**

A vehicle body assembly (100) and a vehicle are provided. Including: a first rocker rail (110) and a second rocker rail (120), arranged at intervals in a width direction of the vehicle, where a battery pack is suitable to be mounted between the first rocker rail (110) and the second rocker rail (120); a first reinforcement plate (140), connecting the first rocker rail (110) to a front body (130); a second reinforcement plate (150), connecting the second rocker rail (120) to the front body (130); and a third reinforcement plate (170) and a fourth reinforcement plate (180), disposed between the first reinforcement plate (140) and the second reinforcement plate (150) and respectively connecting an center tunnel (160) to the front body (130).

## Description

### CROSS-REFERENCE TO RELATED APPLICATIONS

This application is based upon and claims priority to Chinese Patent Application No. 202311562430.8, filed on November 21, 2023, which is hereby incorporated by reference in its entirety.

### TECHNICAL FIELD

The present application relates to the field of vehicles, and in particular, to a vehicle body assembly and a vehicle.

### BACKGROUND

In the related art, an engine compartment force transmission structure in a vehicle mainly receives a force through a front anti-collision beam and then continuously transmits the force backwards through longitudinal rails on both sides. When the force is transmitted to a rear part of the longitudinal rail, the rear part of the longitudinal rail may invade a mounting cavity of a battery pack, thereby causing serious damage to the battery pack and posing a threat to the vehicle and passengers.

### SUMMARY

The present application aims to solve one of the technical problems in the related art at least to a certain extent.

To this end, one objective of the present application is to provide a vehicle body assembly, which can effectively disperse and transmit the collision force, thereby achieving protection for a battery pack and passenger safety.

The present application also provides a vehicle including the vehicle body assembly mentioned above.

The vehicle body assembly according to an embodiment of the present application includes: a first rocker rail and a second rocker rail, arranged at intervals in a width direction of the vehicle, where a battery pack is suitable to be mounted between the first rocker rail and the second rocker rail; a front body, disposed in front of the rocker rail; a first reinforcement plate and a second reinforcement plate, where the first reinforcement plate connects the first rocker rail to the front body, and the second reinforcement plate connects the second rocker rail to the front body; an center tunnel, disposed between the first rocker rail and the second rocker rail; a third reinforcement plate and a fourth reinforcement plate, disposed between the first reinforcement plate and the second reinforcement plate and respectively connecting the center tunnel to the front body; where a structural strength of the first reinforcement plate is greater than that of the third reinforcement plate, and a structural strength of the second reinforcement plate is greater than that of the fourth reinforcement plate.

The vehicle body assembly according to an embodiment of the present application, the vehicle body assembly includes the first reinforcement plate, the second reinforcement plate, the third reinforcement plate and the fourth reinforcement plate, and when the vehicle is in a frontal or side collision, the first reinforcement plate and the second reinforcement plate can transmit the impact force generated by the collision to the first rocker rail and the second rocker rail, and the third reinforcement plate and the fourth reinforcement plate can transmit the impact force generated by the collision to the center tunnel. Besides, by changing the structural strength between different reinforcement plates, the most of the collision force is transmitted to the first rocker rail and the second rocker rail, so as to reduce the intrusion amount of the front body into the battery pack, thereby achieving protection for the battery pack, and achieving maximum protection for passenger safety.

According to the present application, the vehicle includes the vehicle body assembly described above.

Additional aspects and advantages of the present application will be partially presented in the following description, some of which will become apparent from the following description, or be learned from practice of the present application.

### BRIEF DESCRIPTION OF THE DRAWINGS

FIG. 1 is a schematic structural diagram of a vehicle body assembly according to an embodiment of the present application.
FIG. 2 is another schematic structural diagram of the vehicle body assembly in FIG. 1.
FIG. 3 is a schematic cross-sectional view of a first reinforcement plate and a first wheel-house connection plate in FIG. 1.

Reference numerals in the specification are as follows:
100, vehicle body assembly; 110, first rocker rail; 120, second rocker rail; 130, front body; 131, first wheel-house connection plate; 132, second wheel-house connection plate; 133, first longitudinal rail; 134, second longitudinal rail; 140, first reinforcement plate; 141, first segment; 142, second segment; 143, first energy absorption cavity; 150, second reinforcement plate; 151, third segment; 152, fourth segment; 160, center tunnel; 170, third reinforcement plate; 180, fourth reinforcement plate; 190, seat cross member.

### DESCRIPTION OF EMBODIMENTS

Embodiments of the present application will be described in detail below, and examples of the embodiments has been shown in the accompanying drawings, where the same or similar reference numerals refer to the same or similar elements or elements with the same or similar functions throughout. The embodiments described below with reference to accompanying drawings are exemplary and are only used to explain the present application, and should not be understood as limiting of the present application.

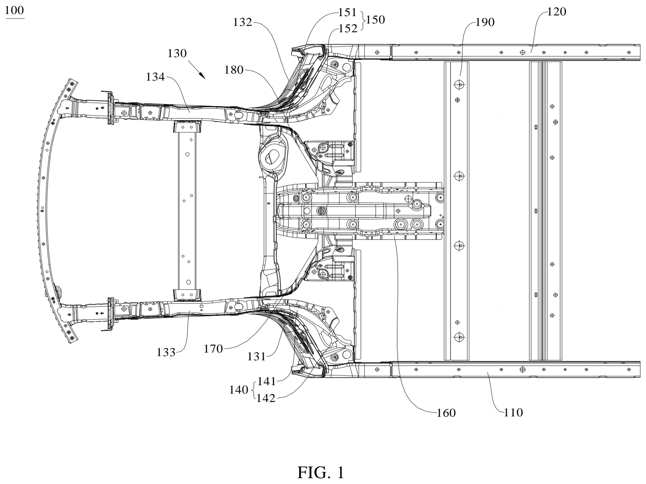

A vehicle body assembly 100 according to an embodiment of the present application will be described below with reference to FIG. 1 to FIG. 3. The vehicle body assembly 100 includes a first rocker rail 110, a second rocker rail 120, a front body 130, a first reinforcement plate 140, a second reinforcement plate 150, an center tunnel 160, a third reinforcement plate 170 and a fourth reinforcement plate 180. The first rocker rail 110 and the second rocker rail 120 are arranged at intervals in a width direction of the vehicle, a battery pack is suitable to be mounted between the first rocker rail 110 and the second rocker rail 120, the front body 130 is disposed in front of the rocker rail, the first reinforcement plate 140 connects the first rocker rail 110 to the front body 130, the second reinforcement plate 150 connects the second rocker rail 120 to the front body 130, the center tunnel 160 is disposed between the first rocker rail 110 and the second rocker rail 120, and the third reinforcement plate 170 and the fourth reinforcement plate 180 are disposed between the first reinforcement plate 140 and the second reinforcement plate 150 and respectively connect the center tunnel 160 to the front body 130, where a structural strength of the first reinforcement plate 140 is greater than that of the third reinforcement plate 170, and a structural strength of the second reinforcement plate 150 is greater than that of the fourth reinforcement plate 180.

At present, an engine compartment force transmission structure in a vehicle mainly receives a force through a front anti-collision beam and then continuously transmits the force backwards through longitudinal rails on both sides. When the force is transmitted to a rear part of the longitudinal rails, the rear part of the longitudinal rails may invade a mounting cavity of a battery pack, thereby causing serious damage to the battery pack and posing a threat to the vehicle and passengers.

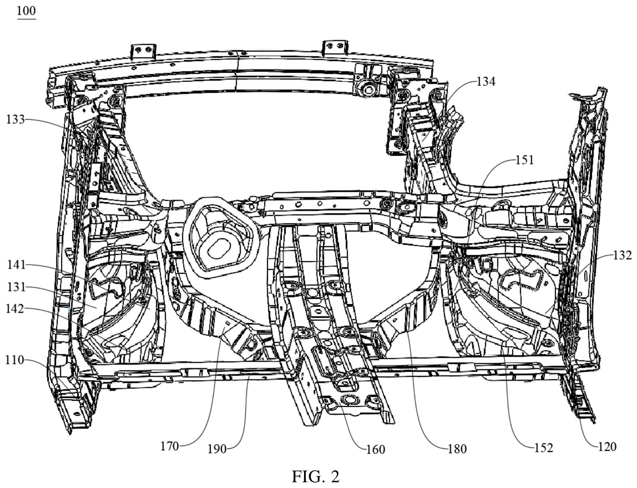

As shown in FIG. 1 and FIG.2, specifically, the vehicle body assembly 100 includes the front body 130 and the rocker rail, where the front body 130 may be formed by structures such as a longitudinal rail and a wheel-house connection plate, and the rocker rail may be disposed on a rear side of the front body 130, where the rocker rail includes the first rocker rail 110 and the second rocker rail 120, the first rocker rail 110 and the second rocker rail 120 are disposed at intervals in the width direction of the vehicle, and the first rocker rail 110 and the second rocker rail 120 are supported to form an accommodation cavity which can be used to accommodate the battery pack. The first reinforcement plate 140 and the second reinforcement plate 150 are further disposed at the junction of the vehicle body assembly 100 and the first rocker rail 110 and the second rocker rail 120, the first reinforcement plate 140 is configured to connect the first rocker rail 110 with the front body 130, and the second reinforcement plate 150 is configured to connect the second rocker rail 120 with the front body 130. When the vehicle is in a collision, the force generated by the collision can be transmitted from the front body 130 to the first rocker rail 110 and the second rocker rail 120 through the first reinforcement plate 140 and the second reinforcement plate 150, thereby reducing the intrusion amount of the front body 130 into the accommodation cavity due to collision, and ensuring the safety of the vehicle battery pack.

The center tunnel 160 is disposed between the first rocker rail 110 and the second rocker rail 120. The center tunnel 160 extends in a length direction of the vehicle and may be connected to the front body 130. The third reinforcement plate 170 and the fourth reinforcement plate 180 are disposed between the center tunnel 160 and the front body 130. The third reinforcement plate 170 and the fourth reinforcement plate 180 are located between the first reinforcement plate 140 and the second reinforcement plate 150, and may connect the center tunnel 160 to the front body 130. When the vehicle is in a collision, the force generated by the collision can be transmitted from the front body 130 to the center tunnel 160 through the third reinforcement plate 170 and the fourth reinforcement plate 180.

Furthermore, the structural strength of the first reinforcement plate 140 is greater than that of the third reinforcement plate 170, and the structural strength of the second reinforcement plate 150 is greater than that of the fourth reinforcement plate 180. Therefore, when the vehicle is in a collision, most of the force generated by the collision is transmitted to the first rocker rail 110 and the second rocker rail 120 through the first reinforcement plate 140 and the second reinforcement plate 150, while a small portion of the force is transmitted to the center tunnel 160 through the third reinforcement plate 170 and the fourth reinforcement plate 180, thereby effectively improving the transmission path of the force, and reducing the force on the battery pack and the intrusion of the front body 130 into the battery pack, so as to achieve the protection of the battery pack.

In short, the vehicle body assembly 100 in the present application includes the first reinforcement plate 140, the second reinforcement plate 150, the third reinforcement plate 170 and the fourth reinforcement plate 180, and when the vehicle is in a frontal or side collision, the first reinforcement plate 140 and the second reinforcement plate 150 can transmit the impact force generated by the collision to the first rocker rail 110 and the second rocker rail 120, and the third reinforcement plate 170 and the fourth reinforcement plate 180 can transmit the impact force generated by the collision to the center tunnel 160. Besides, by changing the structural strength between different reinforcement plates, most of the collision force is transmitted to the first rocker rail 110 and the second rocker rail 120, so as to reduce the intrusion amount of the front body into the battery pack, thereby achieving protection for the battery pack and achieving maximum protection for passenger safety.

In some embodiments of the present application, a volume of the first reinforcement plate 140 is greater than that of the third reinforcement plate 170, a volume of the second reinforcement plate 150 is greater than that of the fourth reinforcement plate 180, and this arrangement can ensure that the first reinforcement plate 140 can transmit more collision force. When the collision force of the front body 130 is transmitted to the first reinforcement plate 140 and the third reinforcement plate 170, the collision force transmitted by the first reinforcement plate 140 is greater than the collision force transmitted by the third reinforcement plate 170, so as to ensure that most of the collision force can be transmitted to the first rocker rail 110 and the second rocker rail 120 and a small portion of the collision force can be transmitted to the center tunnel 160, thereby reducing the intrusion amount of the front body 130 into the battery pack. In other embodiments, a thickness of the first reinforcement plate 140 is greater than that of the third reinforcement plate 170, and a thickness of the second reinforcement plate 150 is greater than that of the fourth reinforcement plate 180, the thickness may be a wall thickness of the reinforcement plate, and the structural strength may be changed by setting different wall thicknesses, thereby changing the magnitudes of the collision forces transmitted by the first reinforcement plate 140 and the second reinforcement plate 150.

As shown in FIG. 1 and FIG. 2, in some embodiments of the present application, the first reinforcement plate 140 includes a first segment 141 and a second segment 142, where the first segment 141 is fixedly connected to or integrally formed with the second segment 142. The first segment 141 extends toward the front body 130 and is fixedly connected to the front body 130. The second segment 142 extends toward the first rocker rail 110 and is fixedly connected to the first rocker rail 110. In a specific implementation, the first segment 141 is fixedly welded to the front body 130, and the second segment 142 is fixedly welded to the first rocker rail 110. By adopting the structure described above, the collision force of the front body 130 can be transmitted to the first rocker rail 110 through the first segment 141 and the second segment 142 in sequence.

The second reinforcement plate 150 includes a third segment 151 and a fourth segment 152, where the third segment 151 is fixedly connected to or integrally formed with the fourth segment 152. The third segment 151 extends toward the front body 130 and is fixedly connected to the front body 130. The fourth segment 152 extends toward the second rocker rail 120 and is fixedly connected to the second rocker rail 120. In a specific implementation, the third segment 151 is fixedly welded to the front body 130, and the fourth segment 152 is fixedly welded to the second rocker rail 120. By adopting the structure described above, the collision force of the front body 130 can be transmitted to the second rocker rail 120 through the third segment 151 and the fourth segment 152 in sequence.

As shown in FIG. 1, in some embodiments of the present application, an included angle between an extending direction of the first segment 141 and an extending direction of the second segment 142 is α1, where the included angle α1 can satisfy the following condition: 130° ≤ α1 ≤ 150°, and an included angle between an extending direction of the third segment 151 and an extending direction of the fourth segment 152 is α2, where the included angle α2 can satisfy the following condition: 130° ≤ α2 ≤ 150°. In a specific implementation, the included angle α1 between the extending direction of the first segment 141 and the extending direction of the second segment 142 is preferably 140 °, and the included angle α2 between the extending direction of the third segment 151 and the extending direction of the fourth segment 152 is preferably 140 °. By setting the included angle between the extending direction of the first segment 141 and the extending direction of the second segment 142 as well as the included angle between the extending direction of the third segment 151 and the extending direction of the fourth segment 152 respectively within the above ranges, it can be ensured that the collision force of the front body 130 can be effectively transmitted to the first rocker rail 110, and the front body 130 can deform toward the outside, thereby reducing the intrusion amount of the front body 130 into the battery pack.

As shown in FIG. 1 and FIG. 2, in some embodiments of the present application, the front body 130 includes a first wheel-house connection plate 131, a second wheel-house connection plate 132, a first longitudinal rail 133 and a second longitudinal rail 134. The first wheel-house connection plate 131 and the second wheel-house connection plate 132 are respectively disposed on both sides in the width direction of the vehicle, where one end of the first wheel-house connection plate 131 is fixedly connected to the first rocker rail 110, the first reinforcement plate 140 is disposed on the first wheel-house connection plate 131 and is fixed to the first wheel-house connection plate 131, one end of the second wheel-house connection plate 132 is fixedly connected to the second rocker rail 120, and the second reinforcement plate 150 is disposed on the second wheel-house connection plate 132 and is fixed to the second wheel-house connection plate 132.

The first longitudinal rail 133 and the second longitudinal rail 134 respectively extend in a first direction, where the first direction may be the length direction of the vehicle. The first longitudinal rail 133 is fixedly connected to the other end of the first wheel-house connection plate 131, and the first reinforcement plate 140 may connect the first longitudinal rail 133 to the first rocker rail 110; therefore, the collision force of the first longitudinal rail 133 can be transmitted to the first rocker rail 110 through the first reinforcement plate 140. The second longitudinal rail 134 is fixedly connected to the other end of the second wheel-house connection plate 132, and the second reinforcement plate 150 may connect the second longitudinal rail 134 to the second rocker rail 120; therefore, the collision force of the second longitudinal rail 134 can be transmitted to the second rocker rail 120 through the second reinforcement plate 150.

As shown in FIG. 1, in some embodiments of the present application, an included angle between the first wheel-house connection plate 131 and the first longitudinal rail 133 is β1, where the included angle β1 satisfies the following condition: 120 ° ≤ β1 ≤ 130. In a specific implementation, the included angle β1 of the first wheel-house connection plate 131 and the first longitudinal member 133 is preferably 125 °, the included angle between the first wheel-house connection plate 131 and the first longitudinal rail 133 is less than the included angle between the extending direction of the first segment 141 and the extending direction of the second segment 142, thereby ensuring that the first reinforcement plate 140 and the first wheel-house connection plate 131 can deform toward the outside of the vehicle upon collision, so as to ensure the safety of the battery pack. An included angle between the second wheel-house connection plate 132 and the second longitudinal rail 134 is β2, and the included angle β2 satisfies the following condition: 120 °≤ β2 ≤ 130°. In a specific implementation, the included angle β2 of the second wheel-house connection plate 132 and the second longitudinal rail 134 is preferably 125 °, the included angle between the second wheel-house connection plate 132 and the second longitudinal rail 134 is less than the included angle between the extending direction of the third segment 151 and the extending direction of the fourth segment 152, thereby ensuring that the second reinforcement plate and the second wheel-house connection plate 132 can also deform toward the outside of the vehicle upon collision, and further ensuring the safety of the battery pack.

As shown in FIG. 1 and FIG. 2, in some embodiments of the present application, the vehicle body assembly 100 further includes a seat cross member 190, which may serve to provide support and improve strength. The seat cross member 190 is disposed between the first rocker rail 110 and the second rocker rail 120, and may extend in a second direction, where the second direction may be the width direction of the vehicle. One end of the center tunnel 160 away from the front body 130 is fixedly connected to the seat cross member 190, and the collision force of the front body 130 can be transmitted to the center tunnel 160 through the third reinforcement plate 170 and the fourth reinforcement plate 180, and then transmitted to the seat cross member 190 through the center tunnel 160. In a specific implementation, the center tunnel 160 is fixed to the seat cross member 190 by means of welding in the length direction and a height direction of the vehicle, so as to ensure the connection strength between the center tunnel 160 and the seat cross member 190.

As shown in FIG. 1 and FIG. 2, in some embodiments of the present application, a ratio of a load F1 borne by the first reinforcement plate 140 in collision to a load F3 borne by the third reinforcement plate 170 in collision satisfies: 8 ≤ F1/F3 ≤ 10, and a ratio of a load F2 borne by the second reinforcement plate 150 in collision to a load F4 borne by the fourth reinforcement plate 180 in collision satisfies: 8 ≤ F2/F4 ≤ 10. The first reinforcement plate 140 and the second reinforcement plate 150 may serve as main force transmission paths for collision transmitting load, and the first reinforcement plate 140 and the second reinforcement plate 150 can transmit the collision force at the longitudinal rail to the rocker rail. The third reinforcement plate 170 and the fourth reinforcement plate 180 may serve as secondary force transmission paths for the collision transmitting load, and the third reinforcement plate 170 and the fourth reinforcement plate 180 can transmit the collision force at the longitudinal rail to the center tunnel 160. Besides, a ratio of a total amount of loads transmitted by the first reinforcement plate 140 and the second reinforcement plate 150 to a total amount of loads transmitted by the third reinforcement plate 170 and the fourth reinforcement plate 180 ranges from 8 to 10. In a specific implementation, the ratio of the load F1 borne by the first reinforcement plate 140 in collision to the load F3 borne by the third reinforcement plate 170 in collision is preferably 9, and the ratio of the load F2 borne by the second reinforcement plate 150 in collision to the load F4 borne by the fourth reinforcement plate 180 in collision is preferably 9.

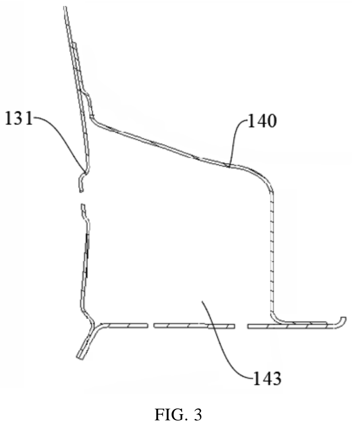

As shown in FIG. 3, in some embodiments of the present application, a first energy absorption cavity 143 is formed between the first reinforcement plate 140 and the first wheel-house connection plate 131, a second energy absorption cavity is formed between the second reinforcement plate 150 and the second wheel-house connection plate 132, the first energy absorption cavity 143 and the second energy absorption cavity can absorb part of the collision energy, and during the collision, the first reinforcement plate 140 and the first wheel-house connection plate 131 can partly collapse into the first energy absorption cavity 143, and the second reinforcement plate 150 and the second wheel-house connection plate 132 can collapse toward the second energy absorption cavity, thereby better achieving the effect of absorbing collision energy of the first energy absorption cavity 143 and the second energy absorption cavity. In a cross-section along the length direction of the vehicle, a height between the first reinforcement plate 140 and the first wheel-house connection plate 131 is D1, which may satisfy the following condition: 117 mm ≤ D1 ≤ 123 mm, and a width between the first reinforcement plate 140 and the first wheel-house connection plate 131 is D2, which may satisfy the following condition: 107 mm ≤ D2 ≤ 113 mm. In a specific implementation, the height D1 between the first reinforcement plate 140 and the first wheel-house connection plate 131 is preferably 120 mm, and the width D2 between the first reinforcement plate 140 and the first wheel-house connection plate 131 is preferably 110mm. By setting the height between the first reinforcement plate 140 and the first wheel-house connection plate 131 as well as the width between the first reinforcement plate 140 and the first wheel-house connection plate 131 respectively within the described ranges, the energy absorption effect of the first energy absorption cavity 143 can be improved. Similarly, in the cross-section along the length direction of the vehicle, a height between the second reinforcement plate 150 and the second wheel-house connection plate 132 is D3, which may satisfy the following condition: 117 mm ≤ D3 ≤ 123 mm, and a width between the second reinforcement plate 150 and the second wheel-house connection plate 132 is D4, which may satisfy the following condition: 107 mm ≤ D4 ≤ 113 mm.

The vehicle in the embodiments of the present application will be briefly described below.

According to an embodiment of the present application, the vehicle is disposed with the vehicle body assembly 100 in the above-mentioned embodiments. Since the vehicle in the embodiments of the present application is disposed with the vehicle body assembly 100 in the above-mentioned embodiment, so that when the vehicle is in is in a frontal or side collision, most of the collision force is transmitted to the first rocker rail 110 and the second rocker rail 120 so as to reduce the intrusion amount of the front body into the battery pack inside the vehicle, thereby effectively protecting the battery pack of the vehicle, and achieving maximum protection for passenger safety.

In the description of the present application, it is to be understood that the orientation or position relationships indicated by the terms "center", "longitudinal", "transverse", "length", "width", "thickness", "up", "down", "front", "rear", "left", "right", "vertical", "horizontal", "top", "bottom", "inside", "outside", "clockwise", "counterclockwise", "axial", "radial", "circumferential", etc. are based on the orientation or position relationships shown in the accompanying drawings, and are only for the convenience of describing the present application and simplifying the description, rather than indicating or implying that the device or element referred to must have a specific orientation or be constructed and operated in a specific orientation, and therefore cannot be understood as limiting the present application.

In the description of the present application, "a first feature" and "a second feature" may include one or more of the features.

In the description of the present application, "a plurality of" means two or more.

In the description of the present application, a first feature being "over" or "under" a second feature may mean that the first feature is in direct contact with the second feature, and may also mean that the first feature and the second feature are not in direct contact with each other, but are contacted through an additional feature therebetween.

In the description of the present application, the first feature being "over", "above" or "on" the second feature may mean that the first feature is directly or diagonally above the second feature, or merely mean that a horizontal height of the first feature is higher than that of the second feature.

In the description of the present application, the description of the reference terms "one embodiment", "some embodiments", "an exemplary embodiment", "an example", "a specific example", or "some examples", etc. means that the specific features, structures, materials, or characteristics described in connection with the embodiment or example are included in at least one embodiment or example of the present application. In this specification, the schematic representations of the above terms do not necessarily refer to the same embodiment or example. Furthermore, the described specific features, structures, materials, or characteristics may be combined in an appropriate manner in any one or more embodiments or examples.

Although the embodiments of the present application have been shown and described, those skilled in the art should understand that various changes, modifications, substitutions and variations can be made to these embodiments without departing from the principle and purposes of the present application, and the scope of the present application is limited by the claims and their equivalents.

## Claims

1. A vehicle body assembly, **characterized by** comprising:
a first rocker rail and a second rocker rail, arranged at intervals in a width direction of the vehicle, wherein a battery pack is suitable to be mounted between the first rocker rail and the second rocker rail;
a front body, disposed in front of the rocker rail;
a first reinforcement plate and a second reinforcement plate, wherein the first reinforcement plate connects the first rocker rail to the front body, and the second reinforcement plate connects the second rocker rail to the front body;
a center tunnel, disposed between the first rocker rail and the second rocker rail;
a third reinforcement plate and a fourth reinforcement plate, disposed between the first reinforcement plate and the second reinforcement plate and respectively connecting the center tunnel to the front body;
wherein a structural strength of the first reinforcement plate is greater than that of the third reinforcement plate, and a structural strength of the second reinforcement plate is greater than that of the fourth reinforcement plate.

2. The vehicle body assembly according to claim 1, wherein a volume or thickness of the first reinforcement plate is greater than that of the third reinforcement plate, and a volume or thickness of the second reinforcement plate is greater than that of the fourth reinforcement plate.

3. The vehicle body assembly according to claim 1 or 2, wherein the first reinforcement plate comprises a first segment and a second segment, wherein the first segment extends toward the front body and is fixedly connected to the front body, and the second segment extends toward the first rocker rail and is fixedly connected to the first rocker rail; and
the second reinforcement plate comprises a third segment and a fourth segment, wherein the third segment extends toward the front body and is fixedly connected to the front body; and the fourth segment extends toward the second rocker rail and is fixedly connected to the second rocker rail.

4. The vehicle body assembly according to claim 3, wherein an included angle between an extending direction of the first segment and an extending direction of the second segment is α1 and satisfies: 130° ≤ α1 ≤ 150°, and an included angle between an extending direction of the third segment and an extending direction of the fourth segment is α2 and satisfies: 130° ≤ α2 ≤ 150°.

5. The vehicle body assembly according to any one of claims 1-4, wherein the front body comprises:
a first wheel-house connection plate and a second wheel-house connection plate, wherein the first wheel-house connection plate is fixedly connected to the first rocker rail and the first reinforcement plate, respectively, and the second wheel-house connection plate is fixedly connected to the second rocker rail and the second reinforcement plate, respectively.

6. The vehicle body assembly according to claim 5, comprising a first longitudinal rail and a second longitudinal rail, respectively extending in a first direction, wherein the first longitudinal rail is fixedly connected to the first wheel-house connection plate, and the second longitudinal rail is fixedly connected to the second wheel-house connection plate; and
wherein the first reinforcement plate connects the first longitudinal rail to the first rocker rail, and the second reinforcement plate connects the second longitudinal rail to the second rocker rail.

7. The vehicle body assembly according to claim 6, wherein an included angle between the first wheel-house connection plate and the first longitudinal rail is β1 and satisfies: 120 °≤ β1 ≤ 130°, and an included angle between the second wheel-house connection plate and the second longitudinal rail is β2 and satisfies: 120° ≤ β2 ≤ 130°.

8. The vehicle body assembly according to claim 6 or 7, further comprising:
a seat cross member, which is disposed between the first rocker rail and the second rocker rail, and extends in a second direction, wherein the second direction is orthogonal to the first direction, and the center tunnel is fixedly connected to the seat cross member.

9. The vehicle body assembly according to claim 8, wherein a ratio of a load F1 borne by the first reinforcement plate in collision to a load F3 borne by the third reinforcement plate in collision satisfies: 8 ≤ F1/F3 ≤ 10, and a ratio of a load F2 borne by the second reinforcement plate in collision to a load F4 borne by the fourth reinforcement plate in collision satisfies: 8 ≤ F2/F4 ≤ 10.

10. The vehicle body assembly according to claim 9, wherein a first energy absorption cavity is formed between the first reinforcement plate and the first wheel-house connection plate, and a second energy absorption cavity is formed between the second reinforcement plate and the second wheel-house connection plate.

11. A vehicle, comprising the vehicle body assembly according to any one of claims 1-10.
